# EUROPÄISCHE PATENTANMELDUNG

(11) **EP 3 929 012 A1**
(43) Veröffentlichungstag der Anmeldung: **29.12.2021**
(21) Anmeldenummer: 21176263.8
(22) Anmeldetag: 27.05.2021
(51) Int. Cl.: B60K 11/08

(54) **LANDWIRTSCHAFTLICHE ARBEITSMASCHINE**

(30) Priorität: 26.06.2020 DE 102020116970
(71) Anmelder: CLAAS Tractor S.A.S., 78141 Vélizy-Villacoublay Cedex (FR)
(72) Erfinder: Heude, Jean-Marie, 78126 Aulnay Sur Mauldre (FR)
(74) Vertreter: CLAAS Gruppe

(57) **Zusammenfassung**

Bei einer landwirtschaftlichen Arbeitsmaschine mit einem Antriebsmotor (7), der in einem Motorraum (16) untergebracht ist, einer Motorraumverkleidung (3-6), die den Motorraum (16) umgibt, und einem Kühlsystem zum Kühlen des Antriebsmotors (7) umfasst das Kühlsystem einen Lüfter (9), mindestens einen sich in der Motorraumverkleidung (3-6) in einer ersten Richtung erstreckenden Luftaustrittsschlitz (11), wenigstens eine den Luftaustrittsschlitz (11) flankierende erste Luftführungslamelle (15) und wenigstens eine zweite Luftführungslamelle (18), die den Luftaustrittsschlitz (11) in einer zweiten Richtung kreuzt.

## Beschreibung

Die vorliegende Erfindung betrifft eine landwirtschaftliche Arbeitsmaschine wie etwa einen Traktor, einen Feldhäcksler, einen Mähdrescher oder dergleichen.

Landwirtschaftliche Arbeitsmaschinen sind herkömmlicherweise durch einen leistungsstarken Verbrennungsmotor angetrieben, dessen Abwärme durch Zwangsbelüften eines Motorraums, in dem der Motor und/oder ein Kühler untergebracht sind, an die Umgebung abgegeben werden muss. Die dabei entstehende Warmluft sollte so von der Arbeitsmaschine weggeführt werden, dass möglichst nur ein kleiner Teil von ihr wieder zur Arbeitsmaschine zurückgelangt und von Neuem angesaugt werden oder die Arbeitsmaschine an anderer Stelle unerwünschterweise aufheizen kann. Auch durch den Abluftstrom aufgewirbelter Staub sollte tunlichst von der Arbeitsmaschine ferngehalten werden, um zu verhindern, dass er in die Fahrerkabine gelangt oder auf wärmeabgebenden Oberflächen eine isolierende Schicht bildet.

Aus DE 10 2007 049 770 A1 ist eine landwirtschaftliche Arbeitsmaschine mit einem Antriebsmotor, der in einem Motorraum untergebracht ist, einer Motorraumverkleidung, die den Motorraum umgibt, und einem Kühlsystem zum Kühlen des Antriebsmotors bekannt, bei der Frischluft an einer Stirnseite der Motorraumverkleidung eingesaugt und nach Passieren eines Kühlers quer zur Fahrtrichtung ausgeblasen wird. Insbesondere direkt gegen den Boden ausgeblasene Luft neigt dazu, am Boden Staub aufzunehmen und aufgrund ihrer hohen Temperatur wieder anzusteigen, so dass eine hinter dem Motorraum angeordnete Fahrerkabine einem hohen Staub- und Wärmeeintrag ausgesetzt ist.

Eine landwirtschaftliche Arbeitsmaschine mit seitlich an einer Motorraumverkleidung angeordneten Luftaustrittsschlitzen ist auch aus EP 3 144 495 B1 bekannt. Luft, die unter einem ungünstigen Winkel aus den Schlitzen austritt, gelangt durch die Vorwärtsbewegung der Maschine zur Fahrerkabine, so dass diese und Komponenten in ihrer Umgebung auch hier einem hohem Wärmeeintrag ausgesetzt sind.

Ziel der vorliegenden Erfindung ist, eine Beeinträchtigung der landwirtschaftlichen Arbeitsmaschine und/oder ihres Fahrers durch Abwärme und andere Immissionen des Motorraums zu minimieren.

Zu diesem Zweck erweist es sich als nötig, den Austrittswinkel der gesamten Abluft aus dem Motorraum in zwei Raumrichtungen zu steuern. Insbesondere bei einem in vertikaler Richtung langgestreckten Luftaustrittsschlitz wie in EP 3 144 495 B1 gezeigt, kann zwar der Luft, die den Schlitz in einem mittigen Bereich desselben passiert, eine ausreichende Geschwindigkeit verliehen werden, damit diese, wenn bei Vorwärtsfahrt die Fahrerkabine den Ort des Luftaustritts erreicht, die warme Abluft bereits in seitlicher Richtung weit genug entfernt ist, um die Fahrerkabine nicht zu erwärmen und/oder nicht wieder angesaugt zu werden; gleichzeitig wird aber an oberen und unteren Enden Luft des Schlitzes mit einem überwiegend nach oben oder unten gerichteten Impuls ausgestoßen, die sich quer zur Fahrtrichtung nur langsam von der Arbeitsmaschine entfernt. Die nach oben ausgestoßene Luft beeinträchtigt durch Hitzeflirren die Sicht des Fahrers, und der nach unten ausgestoßene Anteil neigt stark dazu, am Boden Staub aufzunehmen und diesen sowie seine Wärme beim Wiederansteigen an die Arbeitsmaschine abzugeben.

Um dieses Ziel zu erreichen, wird eine landwirtschaftliche Arbeitsmaschine mit einem Antriebsmotor, der in einem Motorraum untergebracht ist, einer Motorraumverkleidung, die den Motorraum umgibt, einem Kühlsystem zum Kühlen des Antriebsmotors, das einen Lüfter und mindestens einen sich in der Motorraumverkleidung in einer ersten Richtung erstreckenden Luftaustrittsschlitz und wenigstens eine den Luftaustrittsschlitz flankierende erste Luftführungslamelle umfasst, vorgeschlagen, bei der wenigstens eine zweite Luftführungslamelle den Luftaustrittsschlitz in einer zweiten Richtung kreuzt. Indem die Luftführungslamellen die ausgestoßene Abluft in zwei verschiedenen Richtungen führen, können sie ein Auffächern des Luftstroms vermeiden, so dass im Wesentlichen der gesamte Luftstrom dem Motorraum in einer solchen Richtung verlässt, dass ein erneuter Kontakt der Abluft mit der Arbeitsmaschine vermieden wird.

Die ersten und/oder zweiten Führungslamellen sind vorzugsweise relativ zur Motorraumverkleidung unbeweglich. Dies minimiert zum einen die Kosten der Führungslamellen, zum andern kann sichergestellt werden, dass die Führungslamellen nicht absichtlich oder versehentlich in eine Stellung geschwenkt werden, in der sie einen zur Motorraumverkleidung tangentialen Luftstrom führen würden.

Um das Auffächern des Abluftstroms möglichst vollständig zu verhindern bzw. es nach Austreten des Abluftstroms aus dem Motorraum möglichst lange zu verhindern, sind vorzugsweise eine Mehrzahl von Luftaustrittsschlitzen und von sie flankierenden ersten Luftführungslamellen und/oder eine Mehrzahl von zweiten Luftführungslamellen vorgesehen.

Der Luftaustrittsschlitz kann an seinen beiden Längsseiten von ersten Luftführungslamellen flankiert sein; zweckmäßigerweise flankiert wenigstens eine erste Luftführungslamelle auf ihren beiden Seiten Luftaustrittsschlitze.

Erste und zweite Führungslamelle(n) können zweckmäßigerweise einstückig ausgebildet sein, insbesondere durch Abformen aus Kunststoff. Die Fertigung durch Abformen macht es auch einfach, den Luftführungslamellen eine Orientierung zu geben, die stark von der von den wenigstens einen Lüftungsschlitz umgebenden Wandbereichen der Motorraumverkleidung abweicht und etwa durch Stanzen und Umformen von Blech schwierig zu realisieren ist. Eine solche Orientierung hilft, zu verhindern, dass aus dem wenigstens einen Luftaustrittsschlitz austretende heiße Luft tangential an der Außenseite der Motorraumverkleidung entlangstreicht und dabei Wärme wieder an die Arbeitsmaschine abgibt.

Auch ein den wenigstens einen Lüftungsschlitz umgebender Rahmen kann einstückig mit den ersten und/oder zweiten Luftführungslamellen realisiert sein. Insbesondere kann ein solcher Rahmen hinter dem wenigstens einen Luftaustrittsschlitz verbreitert sein, um dort einen an den Luftaustrittsschlitz anschließenden Wandabschnitt der Motorraumverkleidung zu bilden, der sich vorzugsweise bis zu einer an die Motorraumverkleidung angrenzenden Stirnseite einer Fahrerkabine erstrecken kann.

Die Motorraumabdeckung kann in an sich bekannter Weise einen karrosseriefesten Teil und einen Teil umfassen, der beweglich ist, um den Zugang zum Motorraum zu ermöglichen. Der Luftaustrittsschlitz ist vorzugsweise in dem größeren, beweglichen Teil vorgesehen.

Die erste und die zweite Richtung kreuzen einander. Um den Abluftstrom wirksam zu bündeln, sollte der Kreuzungswinkel idealerweise 80- 90° betragen, zumindest aber größer als 45° sein.

Die erste Luftführungslamelle ist vorzugsweise in einer im Wesentlichen vertikalen Richtung langgestreckt. Diese Richtung muss nicht exakt mit der Vertikalen zusammenfallen; Abweichungen von 10, 20 oder gar 30° kommen unter ästhetischen Gesichtspunkten insbesondere dann in Betracht, wenn die Motorraumverkleidung eine Kontur aufweist, zu der die Luftführungslamelle parallel ausgerichtet werden kann.

Der eine Luftaustrittsschlitz befindet sich vorzugsweise in einem vorderen Bereich der Motorraumverkleidung, um den Abstand zu einer dahinter angeordneten Fahrerkabine oder einer anderen Oberfläche der Arbeitsmaschine zu maximieren, von der die Abluft ferngehalten werden soll, und zu verhindern, dass die Abluft bei Vorwärtsfahrt der Maschine auf die Oberfläche trifft.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Seitenansicht einer erfindungsgemäßen Arbeitsmaschine;
- Fig. 2: ein Teil einer Motorraumverkleidung der Arbeitsmaschine aus Fig. 1
- Fig. 3: einen Querschnitt des Teils aus Fig. 2.

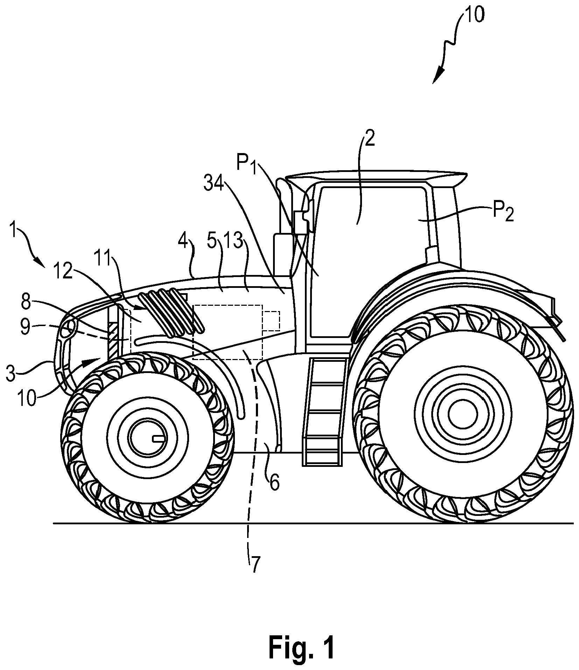

Fig. 1 zeigt eine Seitenansicht eines Traktors als Beispiel einer erfindungsgemäßen landwirtschaftlichen Arbeitsmaschine. Den vorderen Teil einer Karosserie des Traktors bildet eine Motorraumverkleidung 1; den hinteren eine Fahrerkabine 2. Die Motorraumverkleidung 1 ist in etwa quaderförmig; d.h. es sind Kanten bzw. Bereiche starker Krümmung erkennbar, die jeweils eine Stirnseite 3, eine Oberseite 4 und Seitenwände der Motorraumverkleidung 1 voneinander abgrenzen, wobei die Stirnseite 3, die Oberseite 4 und die Seitenwände jeweils, wie in der Fig. gezeigt, ebenfalls gekrümmt sein können, allerdings deutlich schwächer als die Kanten.

Die die Stirnseite 3, die Oberseite 4 und obere Bereiche 5 der Seitenwände sind als eine einstückige Schale aus Kunststoff geformt und an einem Fahrgestell der Arbeitsmaschine schwenkbar montiert, um hochgeklappt zu werden und so den Zugang zu einem Motorraum im Innern der Motorraumverkleidung 1 zu ermöglichen. Untere Bereiche 6 der Seitenwände sind am Fahrgestell fest montiert.

Der Motorraum beherbergt einen Antriebsmotor 7, einen Kühler 8 und einen Lüfter 9. Der Lüfter 9 ist vorgesehen, um Frischluft über einen Einlassbereich 10 am vorderen Ende der Motorraumverkleidung 1 in den Motorraum einzusaugen und durch den Kühler 8 und über den Motor 7 zu blasen; die so erwärmte Luft verlässt den Motorraum über mehrere Luftaustrittsschlitze 11, die in dem oberen Bereich 5 der Motorraumverkleidung 1 dicht hinter dem Einlassbereich 10 gebildet sind.

Der Einlassbereich 10 ist hier eine großflächige Öffnung an einem vorderen Ende jedes oberen Bereichs 5. Um das Ansaugen von groben Partikeln zu verhindern, ist die Öffnung durch ein Gitter oder ein siebartig gelochtes Blech ausgefüllt.

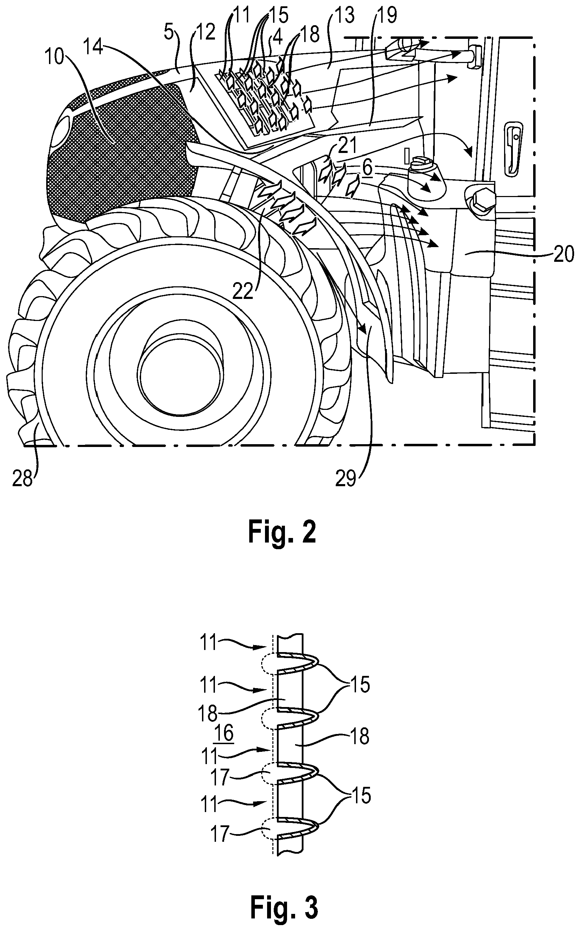

Fig. 2 zeigt die Umgebung der Luftaustrittsschlitze 11 in einer vergrößerten Ansicht. Die Luftaustrittsschlitze 11 erstrecken sich parallel zueinander über einen großen Teil der Höhe des oberen Bereichs 5. Ein schmaler geschlossenwandiger Abschnitt 12 trennt sie vom Einlassbereich 10; hinter ihnen hat der obere Bereich 5 einen weiteren, breiten geschlossenwandigen Abschnitt 13, der den Motor 7 verdeckt. Die Abschnitte 12, 13, die Oberseite 4 und ein Steg 14 am unteren Rand des oberen Bereichs 5 bilden einen einteiligen Rahmen um die Luftaustrittsschlitze 11. Die Luftaustrittsschlitze 11 sind in vertikaler Richtung oder, wie in der Fig. 2 gezeigt, in einer von der Vertikalen um bis zu 30° abweichenden Richtung langgestreckt. Sie sind voneinander durch erste Luftführungslamellen 15 getrennt. Die ersten Luftführungslamellen 15 sind an ihren oberen und unteren Enden einteilig mit der Oberseite 4 und dem Steg 14 verbunden. In einem horizontalen Schnitt, wie in Fig. 3 skizziert, erstrecken sich die Luftführungslamellen 15 im Wesentlichen in Querrichtung der Arbeitsmaschine bzw, rechtwinklig zu den beiderseits angrenzenden geschlossenwandigen Abschnitten 12, 13, um dem Strom der aus dem Motorraum austretenden warmen Abluft einen Impuls in der Querrichtung aufzuprägen.

Die Breite der ersten Luftführungslamellen 15 ist kleiner als die der Luftaustrittsschlitze 11 zwischen ihnen. Um die Strömungsrichtung der austretenden Luft wirksam steuern, sollte Ihre Ausdehnung in der Querrichtung wenigstens der halben Breite der Luftaustrittsschlitze 11 entsprechen. Ihnen eine Ausdehnung zu verleihen, die größer ist als die Breite der Luftaustrittsschlitze 11, ist fertigungstechnisch aufwendig, insbesondere wenn die ersten Luftführungslamellen 15 einteilig mit den Wandabschnitten 12, 13 aus Flachmaterial geformt werden.

Fig. 3 zeigt Luftführungslamellen 15 und Luftaustrittsschlitze 11, die aus einem plastischen Stück Kunststoff-Flachmaterial durch Einstechen von Dornen und zur Seite Schwenken von Material geformt sind. Aus dieser Art der Fertigung resultiert ein flach v-förmiger Querschnitt der Luftführungslamellen 15, dessen konkave Seite dem Motorraum 16 zugewandt ist.

Die dem Luftstrom aus dem Motorraum zugewandte Konkavität ist strömungstechnisch ungünstig; durch angeformte oder nachträglich in die Konkavität eingesteckte Stege 17 kann der Strömungswiderstand vermindert und die Führung der Luft verbessert werden.

Die im wesentlichen vertikal langgestreckten Luftführungslamellen 15 führen die Luft in der Horizontalen und verhindern so, dass sich bei fahrender Arbeitsmaschine ein Warmluftstrom entlang des Wandabschnitts 13 ausbildet, der bei offenstehender Tür in die Fahrerkabine 2 gelangen könnte. Sie verhindern aber nicht ein Auffächern des Luftstroms in ihrer Längsrichtung.

Um dem entgegenzuwirken, sind horizontale zweite Luftführungslamellen 18 vorgesehen, die die Luftaustrittsschlitze 11 kreuzen. Diese können ebenfalls einteilig aus demselben Stück Flachmaterial wie die Luftführungslamellen 15 und Wandabschnitte 12, 13 geformt sein; alternativ können sie mit den Stegen 17 ein einteiliges Gitter bilden.

Der untere Bereich 6 der Seitenwand ist entlang seiner Oberkante in den Motorraum hinein gekröpft, so dass in der Seitenansicht der Fig. 1 und 2 diese Oberkante hinter einem unteren Rand 19 des oberen Bereichs 5 verborgen ist. Um zu verhindern, dass zwischen der Oberkante und diesem unteren Rand 19 Warmluft aus dem Motorraum entweicht und eine außen am unteren Bereich 6 entlangstreichende Strömung bildet, die z.B. einen Kraftstofftank 20 unerwünscht erwärmen würde, ist zwischen oberem und unterem Bereich 5, 6 entlang des unteren Randes 19 eine Dichtung vorgesehen.

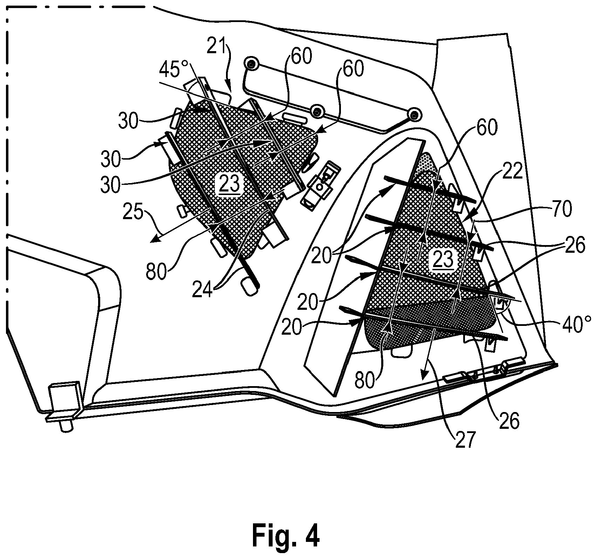

Austrittsöffnungen für Warmluft 21, 22 können auch am unteren Bereich 6 vorgesehen sein. Aufgrund ihrer tiefen Position sind sie in hohem Maße Schmutzpartikeln ausgesetzt und daher-wie auch, um die Finger von Personen von beweglichen Teilen, z.B. eines Lüfters, im Motorraum fernzuhalten - wie der Einlassbereich 10 mit einem Gitter 23 oder Lochblech ausgefüllt. Fig. 4 zeigt den unteren Bereich vom Motorraum aus gesehen. Hier ist zu erkennen, dass hinter den Gittern 23 jeweils ebenfalls Luftführungslamellen 24, 25 senkrecht zu den Gittern 23 angeordnet sind. In der zum Kraftstofftank 20 nächstbenachbarten Öffnung 21 sind die parallelen Luftführungslamellen 24 so angeordnet, dass ihre Oberflächennormale 25 in Richtung des Kraftstofftanks 20 weist, um einer Auffächerung des Luftstroms zum Tank 20 hin entgegenzuwirken. Bei den Lamellen 26 der vorderen Öffnung 22 weist die Oberflächennormale 27 in Richtung einer Achse des Vorderrades 28, um die dort austretende Luft am Vorderrad 28 vorbei, im hier betrachteten Fall durch einen Zwischenraum zwischen dem Vorderrad 28 und einem es umgebenden Schmutzfänger 29, leiten zu können.

### Bezugszeichen

- 1: Motorraumverkleidung
- 2: Fahrerkabine
- 3: Stirnseite
- 4: Oberseite
- 5: oberer Bereich
- 6: unterer Bereich
- 7: Antriebsmotor
- 8: Kühler
- 9: Lüfter
- 10: Einlassbereich
- 11: Luftaustrittsschlitz
- 12,13: geschlossenwandiger Abschnitt
- 14: Steg
- 15: Luftführungslamelle
- 16: Motorraum
- 17: Steg
- 18: Luftführungslamelle
- 19: unterer Rand
- 20: Kraftstofftank
- 21,22: Austrittsöffnung
- 23: Gitter
- 24: Luftführungslamelle
- 25: Oberflächennormale
- 26: Luftführungslamelle
- 27: Oberflächennormale
- 28: Vorderrad
- 29: Schmutzfänger

## Patentansprüche

1. Landwirtschaftliche Arbeitsmaschine mit einem Antriebsmotor (7), der in einem Motorraum (16) untergebracht ist, einer Motorraumverkleidung (3-6), die den Motorraum (16) umgibt, einem Kühlsystem zum Kühlen des Antriebsmotors (7), das einen Lüfter (9) und mindestens einen sich in der Motorraumverkleidung (3-6) in einer ersten Richtung erstreckenden Luftaustrittsschlitz (11) und wenigstens eine den Luftaustrittsschlitz (11) flankierende erste Luftführungslamelle (15) umfasst, **dadurch gekennzeichnet, dass** wenigstens eine zweite Luftführungslamelle (18) den Luftaustrittsschlitz (11) in einer zweiten Richtung kreuzt.

2. Landwirtschaftliche Arbeitsmaschine nach Anspruch 1, **dadurch gekennzeichnet, dass** sie eine Mehrzahl von Luftaustrittsschlitzen (11) und ersten Luftführungslamellen (15) und/oder eine Mehrzahl von zweiten Luftführungslamellen (18) aufweist.

3. Landwirtschaftliche Arbeitsmaschine nach Anspruch 1 oder 2, **dadurch gekennzeichnet, dass** die erste und die zweite Luftführungslamelle (15, 18) einstückig ausgebildet sind.

4. Landwirtschaftliche Arbeitsmaschine nach Anspruch 3, **dadurch gekennzeichnet, dass** die erste und die zweite Luftführungslamelle (15, 18) aus Kunststoff abgeformt sind.

5. Landwirtschaftliche Arbeitsmaschine nach einem der vorhergehenden Ansprüche, **dadurch gekennzeichnet, dass** die Motorraumverkleidung (3-6) einen Rahmen umfasst, der den wenigstens einen Luftaustrittsschlitz (11) umgibt und mit dem die wenigstens eine erste Luftführungslamelle (11) und/oder die wenigstens eine zweite Luftführungslamelle (18) einteilig ausgebildet ist.

6. Landwirtschaftliche Arbeitsmaschine nach Anspruch 5, **dadurch gekennzeichnet, dass** der Rahmen einteilig mit einem sich hinter dem wenigstens einen Luftaustrittsschlitz (11) anschließenden Wandabschnitt (13) der Motorraumverkleidung ist.

7. Landwirtschaftliche Arbeitsmaschine nach einem der vorhergehenden Ansprüche, **dadurch gekennzeichnet, dass** die Motorraumverkleidung (3-6) einen karosseriefesten Teil (6) und einen beweglichen Teil (3-5) umfasst, und dass der wenigstens eine Luftaustrittsschlitz (11) in dem beweglichen Teil (3-5) vorgesehen ist.

8. Landwirtschaftliche Arbeitsmaschine nach einem der vorhergehenden Ansprüche, **dadurch gekennzeichnet, dass** die erste und die zweite Richtung einander unter wenigstens 45° kreuzen.

9. Landwirtschaftliche Arbeitsmaschine nach einem der vorhergehenden Ansprüche, **dadurch gekennzeichnet, dass** die erste Luftführungslamelle (15) in einer im Wesentlichen vertikalen Richtung langgestreckt ist.

10. Landwirtschaftliche Arbeitsmaschine nach einem der vorhergehenden Ansprüche, **dadurch gekennzeichnet, dass** der wenigstens eine Luftaustrittsschlitz (11) in einem vorderen Bereich der Motorraumverkleidung (3-6) vorgesehen ist.
